# EUROPÄISCHE PATENTSCHRIFT

(11) **EP 3 649 342 B1**
(45) Veröffentlichungstag und Bekanntmachung des Hinweises auf die Patenterteilung: **16.10.2024**
(21) Anmeldenummer: 18734117.7
(22) Anmeldetag: 12.06.2018
(51) Int. Cl.: F03D 7/02, F03D 7/04, H04L 12/18, H04H 20/28

(54) **WINDPARKREGLER UND VERFAHREN ZUM BEREITSTELLEN VON DATEN SOWIE WINDENERGIEANLAGE UND VERFAHREN ZUM EMPFANGEN VON DATEN**
WIND PARK CONTROLLER, METHOD FOR PROVIDING DATA, WIND TURBINE, AND METHOD FOR RECEIVING DATA
RÉGULATEUR DE PARC ÉOLIEN ET PROCÉDÉ POUR PRODUIRE DES DONNÉES, ET ÉOLIENNE ET PROCÉDÉ POUR RECEVOIR DES DONNÉES

(30) Priorität: 06.07.2017 DE 102017115154
(43) Veröffentlichungstag der Anmeldung: 13.05.2020
(73) Patentinhaber: Wobben Properties GmbH, 26607 Aurich (DE)
(72) Erfinder: BUSKER, Kai, 26629 Grossefehn (DE)
(74) Vertreter: Eisenführ Speiser
(86) Internationale Anmeldenummer: PCT/EP2018/065470
(87) Internationale Veröffentlichungsnummer: WO 2019/007643

(56) Entgegenhaltungen:
- EP-A1- 2 563 039
- EP-A1- 2 921 699
- US-A1- 2011 175 353

## Beschreibung

Die Erfindung betrifft die Datenkommunikation in einem Windpark, nämlich zwischen einem Windparkregler und Einheiten des Windparks, wie Windenergieanlagen, Energiespeichern oder STATCOM-Einheiten.

Gemäß dem Stand der Technik weisen Windparks eine Vielzahl von Einheiten auf. Diese Einheiten bezeichnen Windenergieanlagen.

Diese Einheiten eines Windparks weisen interne Regler auf, die durch vorgegebene Regelstellgrößen eine Regelgröße, beispielsweise der Energieabgabe der einzelnen Einheit, intern regeln. Die Regelstellgrößen für die Einheiten werden üblicherweise von einem übergeordneten Windparkregler des Windparks bereitgestellt. Diese Regelstellgrößen können demnach während des Betriebs variieren und werden somit wiederholt aktualisiert durch einen Windparkregler für die Einheiten bereitgestellt.

Demnach weist ein Windpark eine zweistufige Regelstrecke auf. Hierbei wird eine erste, nämlich eine übergeordnete, Reglerstufe durch einen Windparkregler bereitgestellt, der Stellgrößen, die im Folgenden auch Regelstellgrößen genannt werden, für einzelne Einheiten des Windparks, zum Beispiel die Windenergieanlagen des Windparks, ermittelt. Diese Stellgrößen werden dann in Reglern der einzelnen Einheiten als Führungsgröße oder Sollwerte betrachtet und dort einer zweiten, nämlich einer untergeordneten Reglerstruktur zugeführt.

Die vorliegende Erfindung bezieht sich auf das Übertragen einer mit dem Windparkregler ermittelten Regelstellgröße an die einzelnen Einheiten und somit auf die zuvor genannte übergeordnete Regelstrecke. Der Windparkregler bezieht seine Ist-Werte über eine Rückführung, von beispielsweise einem Messpunkt im Bereich eines Netzeinspeisepunktes des Windparks, der auch Netzknoten genannt wird. Das heißt, am Netzknoten, an dem alle Einheiten des Windparks gemeinschaftlich Energie in das Netz einspeisen, werden Werte, wie beispielsweise die Spannung, die Frequenz, die Wirkleistung und/oder die Blindleistung, die die Einheiten zur Verfügung stellen und die in ein Versorgungsnetz eingespeist werden, gemessen und als Ist-Wert bereitgestellt. Dieser Ist-Wert wird dem Windparkregler zugeführt, der in Abhängigkeit einer ebenfalls bereitgestellten Führungsgröße Stellgrößen bzw. Regelstellgrößen für die Einheiten ermittelt und bereitstellt. Der Windparkregler erhält seine Führungsgröße beispielsweise von einem Netzbetreiber oder einem übergeordneten Clusterregler.

US 2011/0175353 A1 offenbart einen Datenaustausch zwischen Windenergieanlagen und einer Windparksteuerung zum Überwachen des Betriebs der Windenergieanlagen und zum Übertragen von Steuersignalen an die Steuereinheiten der Windenergieanlagen durch die Windparksteuerung. Die Windenergieanlagen werden hierbei individuell durch die Windparksteuerung angesteuert. Das Dokument EP 2 921 699 A1 offenbart einen gruppierten Windpark, wobei eine Gruppe von Windenergieanlagen mit gleichen Werten angesteuert und eine andere Gruppe von Windenergieanlagen mit individuellen Werten angesteuert wird.

Die vom Windparkregler für die Einheiten bereitgestellten Regelstellgrößen werden über eine Datenleitung, die aus Datensicherheitsgründen als elektrische Leitung ausgeführt ist, an die einzelnen Einheiten des Windparks übertragen. Aufgrund der physikalischen Eigenschaften dieser Datenleitungen, insbesondere bei bestehenden Windparks älterer Generationen, ist eine Datenübertragungsrate jedoch begrenzt, sodass nur eine maximale Anzahl von Datenpaketen in einem bestimmten Zeitraum vom Windparkregler an die einzelnen Einheiten übertragen werden kann.

Insbesondere für Netzdienstleistungen, wie die Netzstützung, sind variierende Regelstel-Igrößen vom Windparkregler mit einer Aktualisierungsrate von wenigen Sekunden oder sogar unter einer Sekunde für die Windenergieanlagen bereitzustellen. Um die zeitlichen Anforderungen der Reaktion der einzelnen Einheiten auf veränderte Regelstellgrößen zu gewährleisten, können die einzelnen Einheiten eines Windparks nicht individuell durch den Windparkregler angesprochen werden, da die Datenrate insbesondere bei alten Windparks hierfür unzureichend ist. Teilweise weisen Windparks Datenraten auf, die so gering sind, dass der vom Netz geforderte Zeitraum zur Anpassung der Regelung gerade das Aussenden und Empfangen eines einzigen Datenpakets erlaubt. Eine Reaktionszeit aller Einheiten bei separatem Ansprechen der Einheiten durch einen individuellen Datensatz wäre somit ungenügend.

Um dem zu begegnen, werden Datenpakete vom Windparkregler ausgesendet, die als sogenannter Rundruf ausgebildet sind. Das heißt, alle Einheiten des Windparks werden von einem Datenpaket angesprochen bzw. empfangen dieses Datenpaket und übernehmen entsprechend der Aktualisierungsrate die im Datenpaket enthaltene Regelstellgröße zur Aktualisierung der zuvor durch ein Datenpaket empfangenen Regelstellgröße.

Druckschrift EP 2 563 039 A1 offenbart ein Übertragen von Steuerbefehlen mittels Rundruf.

Ist demnach beispielsweise ein Energieüberangebot vorhanden und muss die Gesamtleistungsabgabe des Windparks gedrosselt werden, so wird ein reduzierter Wert für die abzugebende Wirkleistung des Windparks im Windparkregler in die Anteile für die einzelnen Einheiten aufgeteilt und diese reduzierte Wirkleistungsregelstellgröße im Rundruf allen Einheiten bereitgestellt. Alle Einheiten reduzieren dann entsprechend ihre erzeugte Wirkleistung, beispielsweise um einen vordefinierten prozentualen Anteil.

Für den Windparkbetreiber ist diese Situation unvorteilhaft, insbesondere wenn der Windpark aus Windenergieanlagen besteht, die zu unterschiedlichen Zeiten aufgestellt wurden und daher unterschiedlich vergütet werden. Wünschenswert wäre es nämlich, die Windenergieanlagen, deren Energie weniger hoch vergütet wird, verhältnismäßig stärker im Hinblick auf ihre Energieabgabe zu reduzieren als die Energieabgabe der Windenergieanlagen, deren Energie verhältnismäßig besser vergütet wird.

Aufgabe der vorliegenden Erfindung ist es demnach, einerseits eine schnelle Regelung der Windenergieanlagen eines Windparks zu ermöglichen, die den Anforderungen der Netzbetreiber genügt, und andererseits eine individualisierte Regelung der Windenergieanlagen beispielsweise in Abhängigkeit ihres Aufstelldatums oder ihrer Position im Windpark zu ermöglichen. Jedenfalls soll einem der Probleme des Standes der Technik begegnet werden.

Das Deutsche Patent- und Markenamt hat in der Prioritätsanmeldung zu vorliegender Anmeldung den folgenden Stand der Technik recherchiert: US 2015/0219075 A1 und DE 10 2007 044 601 A1.

Die Erfindung betrifft ein Verfahren zum Bereitstellen von Datensätzen nach Anspruch 1.

Weiterhin betrifft die Erfindung ein Verfahren zum Empfangen eines Datenpakets nach Anspruch 7.

Dank der Erfindung werden also in einem Datenpaket, das für alle Einheiten bereitgestellt wird, mehrere Datensätze bereitgestellt, wobei jeder Datensatz jeweils individuell genau einer Gruppe der Einheiten zuzuordnen ist. Dieses Datenpaket wird allen Einheiten zugeführt und von allen Einheiten empfangen. Das Datenpaket kann also im Rahmen eines Rundrufs ausgesendet werden. Jede Einheit extrahiert dann aus diesem Datenpaket den Datensatz, der der Gruppe, der die jeweilige empfangende Einheit zugeordnet ist, zugeordnet ist, und verwendet diesen extrahierten Datensatz, während die Datensätze, die für andere Gruppen bestimmt sind, ignoriert werden. Somit können alle Windenergieanlagen gleichzeitig mit einem einzigen Datenpaket erreicht werden. Gleichzeitig wird eine individuelle Ansteuerung von mindestens zwei Gruppen möglich. Ein individuelles Ansprechen jeder einzelnen Einheit durch einen Windparkregler ist somit nicht nötig. Ein Datenpaket weist hierzu eine Bitlänge auf, die es ermöglicht, mindestens zwei individuelle Datensätze darin zu enthalten.

Gemäß einer ersten Ausführungsform umfassen die individuellen Datensätze Steuersignale oder eine Vorhalteleistung. Dementsprechend werden gemäß dieser Ausführungsform durch die individuellen Daten beim Verfahren zum Bereitstellen beispielsweise Steuersignale oder Regelstellgrößen bereitgestellt und gemäß dem Verfahren zum Empfangen entsprechend Steuersignale oder Regelstellgrößen aus dem Datenpaket als Datensatz extrahiert.

Erfindungsgemäß umfasst das Datenpaket neben den individuellen Datensätzen jeweils für jede der Gruppen auch mindestens einen globalen Datensatz, der für mehrere oder alle Gruppen bereitgestellt wird. Neben dem Vorgeben unterschiedlicher Datensätze für unterschiedliche Gruppen ist somit auch das Bereitstellen eines globalen Datensatzes für mehrere oder alle Einheiten mit einem einzigen Datenpaket möglich. Gemäß dem Verfahren wird somit ein Datenpaket erzeugt, das mehrere individuelle Datensätze jeweils für jede der Gruppen und zusätzlich mindestens einen globalen Datensatz enthält. Von einer Einheit wird entsprechend gemäß diesem Ausführungsbeispiel ein individueller Datensatz aus dem Datenpaket extrahiert, das der Gruppe, der die Einheit zugeordnet ist, zugeordnet ist. Außerdem extrahiert die Einheit neben dem individuellen Datensatz auch einen globalen Datensatz. Somit ist mit einem Datenpaket das gleichzeitige Vorgeben eines globalen Datensatzes für alle Einheiten und das individuelle Vorgeben eines individuellen Datensatzes für unterschiedliche Gruppen von Einheiten möglich.

Erfindungsgemäß entsprechen die individuellen Daten Wirkleistungsregelstellgrößen und die globalen Daten Blindleistungsregelstellgrößen. Dementsprechend werden beim Verfahren zum Bereitstellen Wirkleistungsregelstellgrößen für jede einzelne Gruppe von Einheiten individuell bestimmt und als individueller Datensatz jeweils für jede der Gruppen in ein Datenpaket eingefügt. In dasselbe Datenpaket wird zusätzlich eine erzeugte Blindleistungsregelstellgröße als globaler Datensatz hinzugefügt. Gemäß dem Verfahren zum Empfangen wird gemäß dieser Ausführungsform entsprechend in einer Einheit ein Datenpaket empfangen und aus dem Datenpaket die Wirkleistungsregelstellgröße extrahiert, die der Gruppe, der die Einheit zugeordnet ist, zugeordnet ist. Neben dieser Wirkleistungsregelstellgröße, die individuell für die Gruppe bestimmt ist, der die Windenergieanlage zugeordnet ist, die das Datenpaket empfängt, wird zusätzlich eine Blindleistungsregelstellgröße aus demselben Datenpaket extrahiert, die einem globalen Datensatz des Datenpakets entspricht.

Hierdurch ist es möglich, im Falle einer vom Netzbetreiber vorgegebenen Blindleistungsänderung, die vom Park zur Netzstützung bereitgestellt werden soll, diese Blindleistung von allen Anlagen gleichzeitig bereitzustellen. Andererseits kann die Wirkleistung mit einem individuellen Anteil für unterschiedliche Gruppen geändert werden.

Gemäß einer weiteren Ausführungsform umfasst der Windpark mindestens zwei Gruppen, wobei einer dieser Gruppen alle Windenergieanlagen zugeordnet sind, die vor einem vorbestimmten Datum bereits Energie in ein Netz eingespeist haben oder vor dem Datum mit dem Netz verbunden waren, während der anderen oder den anderen Gruppen die Windenergieanlagen zugeordnet sind, die erst nach dem vorbestimmten Datum Energie in ein Netz eingespeist haben oder mit dem Netz verbunden waren. Bevorzugterweise wird den Windenergieanlagen, die der Gruppe zugeordnet sind, die bereits vor dem vordefinierten Datum mit dem Netz verbunden waren oder in dieses eingespeist haben, ein Datenpaket mit einer individuellen Wirkleistungsregelstellgröße zugeführt, das es den Windenergieanlagen der ersten Gruppe erlaubt, eine vergleichsweise höhere Wirkleistung abzugeben, als die Einheiten der anderen Gruppen.

Somit können im Falle einer vom Netzbetreiber vorgegebenen Begrenzung der Wirkleistung schlechter vergütete neue Anlagen verhältnismäßig stärker im Hinblick auf ihre Wirkleistungsabgabe begrenzt werden als besser vergütete Anlagen. Dies erfolgt weiterhin im Rahmen des Aussendens eines einzigen Datenpakets, das an alle Windenergieanlagen ausgesendet wird. Somit lassen sich auf Anforderungen des Netzbetreibers sehr schnell reagieren und vorgeschriebene Grenzen innerhalb vorgeschriebener Reaktionszeiten einhalten. Gleichzeitig lassen sich durch die individuellen Datensätze unterschiedliche Gruppen von Einheiten unterschiedlich ansteuern.

Gemäß einer weiteren Ausführungsform werden den Einheiten, die unterschiedlichen Gruppen zugeordnet sind, unterschiedliche Standardwerte, die auch Default-Werte genannt werden können, zugeordnet. Standardwerte werden für eine Regelung der Einheit verwendet, wenn der Empfang von Datenpaketen gestört ist. Diese Default- oder Standardwerte sind beispielsweise Standardwerte für Wirkleistungsregelstellgrößen oder Blindleistungsregelstellgrößen oder eine Vorhalteleistung.

Außerdem betrifft die Erfindung einen Windparkregler, um das Verfahren zum Bereitstellen von Daten auszuführen, und eine Windenergieanlage, um das Verfahren zum Empfangen von Datenpaketen auszuführen. Außerdem umfasst die Erfindung einen Windpark mit einem Windparkregler zum Bereitstellen von Datenpaketen und mehreren Windenergieanlagen zum Empfangen von Datenpaketen.

Weitere Ausführungsformen ergeben sich anhand der in den Figuren näher erläuterten Ausführungsbeispiele.
- Fig. 1: zeigt eine Windenergieanlage,
- Fig. 2: einen Windpark,
- Fig. 3: einen Windparkregler,
- Fig. 4: eine Einheit,
- Fig. 5: die Schritte des Verfahrens zum Bereitstellen eines Datensatzes und
- Fig. 6: die Schritte des Verfahrens zum Empfangen eines Datensatzes.

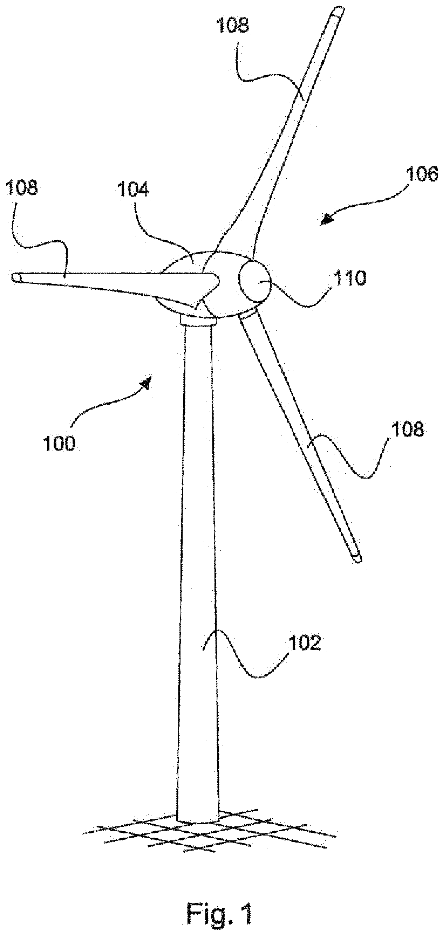

Fig. 1 zeigt eine schematische Darstellung einer Einheit 100, nämlich einer Windenergieanlage 100, eines Windparks 112. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

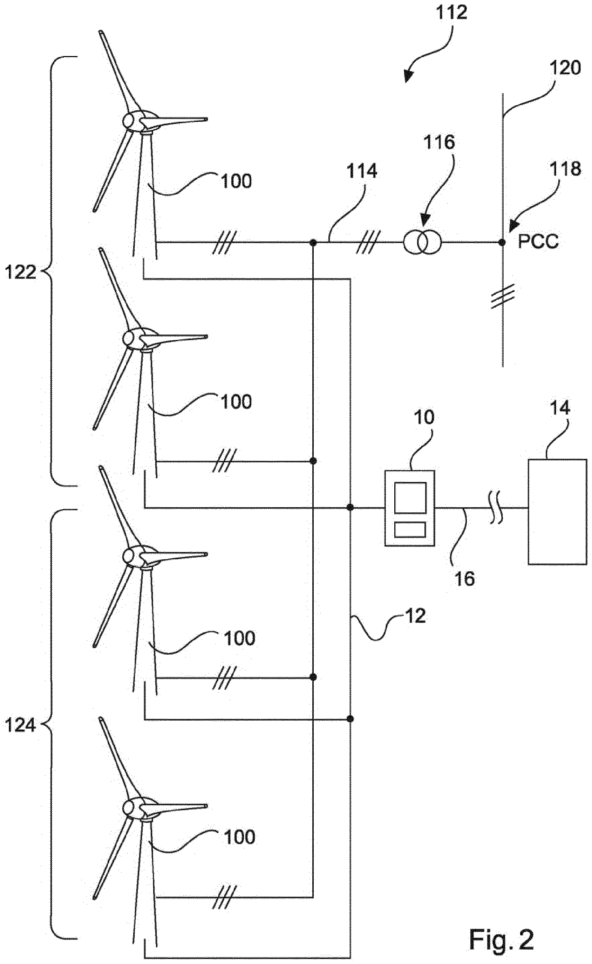

Fig. 2 zeigt einen Windpark 112 mit beispielhaft vier Windenergieanlagen 100, die gleich oder verschieden sein können. Die vier Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park 112 hochtransformiert, um dann an dem Einspeisepunkt 118, der auch allgemein als PCC, Netzknoten oder Netzeinspeiseknoten bezeichnet wird, in das Versorgungsnetz 120 einzuspeisen.

Fig. 2 ist nur eine vereinfachte Darstellung eines Windparks 112. Auch kann beispielsweise das Parknetz 114 anders gestaltet sein, in dem beispielsweise auch ein Transformator 116 am Ausgang jeder Windenergieanlage 100 vorhanden ist, um nur ein anderes Ausführungsbeispiel zu nennen.

Die Windenergieanlagen 100 sind gemäß diesem Ausführungsbeispiel in zwei Gruppen 122, 124 eingeteilt. Die oberen beiden Windenergieanlagen 100 sind einer ersten Gruppe 122 und die unteren beiden Windenergieanlagen 100 einer zweiten Gruppe 124 zugeordnet.

Ferner zeigt Fig. 2 einen Regler 10, der hier ein Windparkregler 10 ist, der über ein Bussystem 12 mit jeder einzelnen Windenergieanlage 100 verbunden ist. Außerdem weist Fig. 2 eine Leitzentrale 14 eines Betreibers, nämlich eine Netzbetreibers oder eines Parkbetreibers, auf. Im vorliegenden Ausführungsbeispiel wird die Datenübertragung zwischen Windparkreglern 10 und Windenergieanlagen 100 im Detail betrachtet. Die Leitzentrale 14 ist mit einem Dateneingang 15 des Windparkreglers 10 über eine Verbindung 16 verbunden. Die Verbindung 16 entspricht zum Beispiel einer TCP/IP-Verbindung.

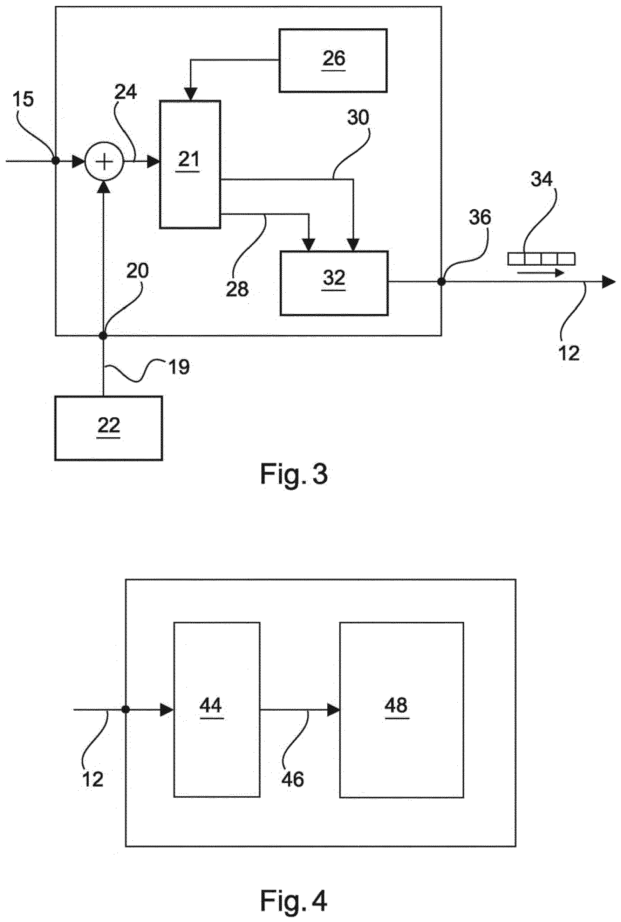

Fig. 3 zeigt den Windparkregler 10 in vergrößerter Darstellung. Der Windparkregler 10 umfasst einen Dateneingang 15, mit dem der Windparkregler 10 mit der Leitzentrale 14 eines Betreibers verbunden ist. Ferner weist der Windparkregler 10 einen weiteren Dateneingang 20 auf, an den eine Rückführung 19 des Regelkreises, der mit einem Regler 21 des Windparkreglers 10 geregelt wird, zugeführt wird. Die Rückführung 19 ist mit einer Messstelle 22, die im Bereich des Einspeisepunkts 118 angeordnet ist und elektrische Größen des Parknetzes 114 misst, verbunden. Diese elektrischen Größen sind zum Beispiel die Spannung und/oder die Frequenz des elektrischen Stroms bzw. der elektrischen Spannung im Parknetz 114. Eine Regelabweichung 24 wird im Windparkregler 10 durch Zuführen der Rückführung 19 über den Dateneingang 20 und eine vom Betreiber über den Dateneingang 15 vorgegebene Führungsgröße bestimmt. Die Regelabweichung 24 wird dem Regler 21 zugeführt, der Stellgrößen für die Einheiten 100 des Windparks 112 bestimmt.

Hierbei bestimmt der Regler 21 individuelle Stellgrößen für unterschiedliche Gruppen von Einheiten 100 des Windparks 112. Hierzu wird dem Regler 21 aus einem Speicher 26 eine Information zugeordnet über die Anzahl von Gruppen sowie die Anzahl der Einheiten 100, die den einzelnen Gruppen zugeordnet sind. Außerdem ist im Speicher 26 hinterlegt, welche Eigenschaften die einzelnen Einheiten einer Gruppe aufweisen. Der Regler 21 bestimmt somit - wenn im vorliegenden Beispiel von zwei Gruppen des Windparks 112 ausgegangen wird - einen ersten Datensatz 28 und einen zweiten Datensatz 30, die individuell für zwei unterschiedliche Gruppen von Einheiten 100 ermittelt werden. Diese beiden individuellen Datensätze 28, 30 werden dann einem Datenpaketerzeuger 32 zugeführt, der aus diesen beiden Datensätzen 28, 30 ein Datenpaket 34 erzeugt und dieses am Ausgang 36 ausgibt. Das Datenpaket 34 mit zwei Datensätzen 28, 30 wird somit auf der Busleitung 12 bereitgestellt.

Das Datenpaket 34 enthält auch noch mindestens einen globalen Datensatz, wobei dies im vorliegenden Ausführungsbeispiel nicht dargestellt ist.

Fig. 4 zeigt einen Ausschnitt aus einer Einheit 100 und zwar nur die Steuerung 40 einer Einheit 100. Die Steuerung 40 weist einen Dateneingang 42 auf, dem über eine Busleitung 12 das Datenpaket 34 zugeführt wird. Das Datenpaket 34 wird dann einer Extrahiereinheit 44 zugeführt. Die Extrahiereinheit 44 extrahiert aus dem Datenpaket 34 den Datensatz 28, 30, der der Gruppe zugeordnet ist, der auch die Einheit 100 zugeordnet ist. Der extrahierte Datensatz 46 wird dann einer Regelung 48 der Einheit 100 zum Regeln der Einheit 100 zugeführt.

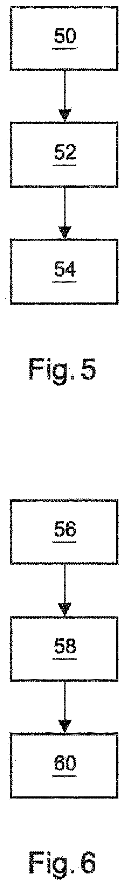

Fig. 5 zeigt die Schritte eines Verfahrens zum Bereitstellen eines Datensatzes 28, 30.

Zunächst werden in einem Schritt 50 individuelle Datensätze 28, 30 jeweils für jede der Gruppen 122, 124 mehrerer Einheiten 100 eines Windparks 112 erzeugt und in Schritt 52 aus den individuellen Datensätzen 28, 30 ein Datenpaket 34 erzeugt. In Schritt 54 wird das Datenpaket 34 an alle Einheiten 100 eines Windparks 112 ausgesendet.

Fig. 6 zeigt die Schritte des Verfahrens zum Empfangen von Daten durch eine Einheit 100, wobei im Schritt 56 ein Datenpaket 34 empfangen wird, das zumindest individuelle Daten für jede der Gruppen 122, 124 von Einheiten 100 eines Windparks umfasst, und in Schritt 58 der Datensatz 28, 30 aus dem Datenpaket 34 für die Gruppe 122, 124 extrahiert wird, der die Einheit 100 zugeordnet ist. In Schritt 60 wird dann der extrahierte Datensatz 46 in der Einheit 100 verwendet.

## Patentansprüche

1. Verfahren zum Bereitstellen von Datensätzen (28, 30) für mehrere Windenergieanlagen (100) eines Windparks (112), wobei der Windpark (112) in mindestens zwei Gruppen (122, 124) aufgeteilt ist und mindestens eine, mehrere oder alle Gruppen (122, 124) jeweils mindestens zwei Windenergieanlagen (100) umfassen, umfassend die Schritte:
- Erzeugen (50) eines individuellen Datensatzes (28, 30) jeweils für jede der Gruppen, wobei der individuelle Datensatz (28, 30) eine Wirkleistungsregelstellgröße aufweist, die zum Regeln der Windenergieanlage (100) verwendet wird,
**gekennzeichnet durch**
- Erzeugen (52) eines Datenpakets (34), das zumindest die erzeugten individuellen Datensätze (28, 30) umfasst, und
- Aussenden (54) des Datenpakets (34) an alle Windenergieanlagen des Windparks,
wobei das Datenpaket (34) neben den individuellen Datensätzen jeweils für jede der Gruppen auch mindestens einen globalen Datensatz umfasst, der für mehrere oder alle Gruppen bereitgestellt wird, wobei der globale Datensatz eine Blindleistungsregelstellgröße aufweist, die zum Regeln der Windenergieanlage (100) verwendet wird.

2. Verfahren nach Anspruch 1, wobei das Verfahren die individuellen Datensätze (28, 30) mit Steuersignalen oder einer Vorhalteleistung bereitstellt.

3. Verfahren nach einem der vorhergehenden Ansprüche, wobei als individuelle Daten Wirkleistungsregelstellgrößen und als globale Daten Blindleistungsregelstellgrößen erzeugt werden.

4. Verfahren nach einem der vorhergehenden Ansprüche, wobei einer ersten Gruppe (122, 124) alle Windenergieanlagen (100) zugeordnet werden, die vor einem vorbestimmten Datum erstmalig Energie in ein verbundenes Netz (120) eingespeist haben und/oder mit dem Netz (120) verbunden waren, und die weitere oder alle weiteren Gruppen (122, 124) die übrigen Windenergieanlagen (100) des Windparks (112) enthalten.

5. Verfahren nach einem der vorhergehenden Ansprüche, wobei individuelle Standardwerte für die Windenergieanlagen (100) bereitgestellt werden, die für die Windenergieanlagen (100) der gleichen Gruppe (122, 124) die gleichen Werte und für unterschiedliche Gruppen (122, 124) unterschiedliche Werte aufweisen.

6. Windparkregler, der eingerichtet ist, das Verfahren nach einem der Ansprüche 1 bis 5 auszuführen.

7. Verfahren zum Empfangen von Datensätzen (28, 30), die nach einem der Ansprüche 1 bis 5 bereitgestellt werden, durch eine Windenergieanlage (100) eines Windparks (112), wobei die Windenergieanlage (100) mindestens einer von zwei Gruppen (122, 124) eines Windparks (112) zugeordnet ist, wobei mindestens eine, mehrere oder alle Gruppen (122, 124) jeweils mindestens zwei Windenergieanlagen (100) umfassen, umfassend die Schritte:
- Empfangen (56) eines Datenpakets (34), das zumindest individuelle Datensätze (28, 30) jeweils für jede der Gruppen (122, 124) umfasst, wobei ein individueller Datensatz (28, 30) eine Wirkleistungsregelstellgröße aufweist, die zum Regeln der Windenergieanlage (100) verwendet wird, wobei das Datenpaket (34) neben den individuellen Datensätzen jeweils für jede der Gruppen auch mindestens einen globalen Datensatz umfasst, der für mehrere oder alle Gruppen bereitgestellt wird, wobei der globale Datensatz eine Blindleistungsregelstellgröße aufweist, die zum Regeln der Windenergieanlage (100) verwendet wird,
- Extrahieren (58) zumindest des Datensatzes (28, 30) aus dem Datenpaket (34) für die Gruppe (122, 124), der die Windenergieanlage (100) zugeordnet ist, und
- Verwenden (60) des extrahierten Datensatzes (46) in der Windenergieanlage (100).

8. Verfahren nach Anspruch 7, wobei der Datensatz (28, 30) Steuersignale enthält, die in der Windenergieanlage (100) zum Steuern der Windenergieanlage (100) verwendet werden.

9. Verfahren nach einem der Ansprüche 7 und 8, wobei die Windenergieanlage (100) einer ersten Gruppe (122) zugeordnet wird, wenn die Windenergieanlage (100) vor einem vorbestimmten Datum erstmalig Energie in ein verbundenes Netz (120) eingespeist hat und/oder mit dem Netz (120) verbunden wurde, oder anderenfalls einer anderen als der ersten Gruppe (122) zugeordnet wird.

10. Verfahren nach einem der Ansprüche 7 bis 9, wobei die Windenergieanlage (100) gleiche Standardregelstellgrößen aufweist wie die weiteren Windenergieanlagen (100) der gleichen Gruppe (122, 124) und unterschiedliche Standardregelstellgrößen als die Windenergieanlagen (100) anderer Gruppen (122, 124).

11. Windenergieanlage, die eingerichtet ist, das Verfahren nach einem der Ansprüche 7 bis 10 auszuführen.

12. Windpark mit einem Windparkregler (10, 21) nach Anspruch 6 und mehreren Windenergieanlagen (100) nach Anspruch 11.

## Claims

1. A method for providing data sets (28, 30) for a plurality of wind turbines (100) of a wind park (112), wherein the wind park (112) is divided into at least two groups (122, 124) and at least one group, a plurality of groups or all groups (122, 124) in each case comprise(s) at least two wind turbines (100), comprising the following steps:
- generating (50) an individual data set (28, 30) in each case for each of the groups, wherein the individual data set (28, 30) has an active power controlling control variable that is used to control the wind turbine (100),
**characterized by**:
- generating (52) a data packet (34) which comprises at least the generated individual data sets (28, 30), and
- transmitting (54) the data packet (34) to all wind turbines of the wind park,
wherein, along with the individual data sets for each of the respective groups, the data packet (34) also comprises at least one global data set for a plurality of groups or for all groups (122, 124), wherein the global data set has a reactive power controlling control variable that is used to control the wind turbine (100).

2. The method as claimed in claim 1, wherein the method provides the individual data sets (28, 30) with control signals or a reserve power.

3. The method as claimed in one of the preceding claims, wherein active power controlling control variables are generated as individual data and reactive power controlling control variables are generated as global data.

4. The method as claimed in one of the preceding claims, wherein all wind turbines (100) which have fed energy for the first time into a connected network (120) and/or were connected to the network (120) before a predefined date are assigned to a first group (122, 124) and the further groups or all further groups (122, 124) contain the remaining wind turbines (100) of the wind park (112).

5. The method as claimed in one of the preceding claims, wherein individual standard values are provided for the wind turbines (100), said standard values having the same values for the wind turbines (100) of the same group (122, 124) and having different values for different groups (122, 124).

6. A wind park controller which is configured to carry out the method as claimed in one of claims 1 to 5.

7. A method for receiving data sets (28, 30) which are provided as claimed in one of claims 1 to 6, by a wind turbine (100) of a wind park (112), wherein the wind turbine (100) is assigned to at least one of two groups (122, 124) of a wind park (112), wherein at least one group, a plurality of groups, or all groups (122, 124) in each case comprise(s) at least two wind turbines (100), comprising the following steps:
- receiving (56) a data packet (34) which comprises at least individual data sets (28, 30) in each case for each of the groups (122, 124), wherein an individual data set (28, 30) has an active power controlling control variable that is used to control the wind turbine (100), wherein, along with the individual data sets for each of the respective groups, the data packet (34) also comprises at least one global data set for a plurality of groups or for all groups (122, 124), wherein the global data set has a reactive power controlling control variable that is used to control the wind turbine (100),
- extracting (58) at least the dataset (28, 30) from the data packet (34) for the group (122, 124) to which the wind turbine (100) is assigned, and
- using (60) the extracted dataset (46) in the wind turbine (100).

8. The method as claimed in claim 7, wherein the dataset (28, 30) contains control signals which are used in the wind turbine (100) to control the wind turbine (100.

9. The method as claimed in one of claims 7 and 8, wherein the wind turbine (100) is assigned to a first group (122) if the wind turbine (100) has fed energy into a connected network (120) for the first time and/or was connected to the network (120) before a predefined date, or is otherwise assigned to a group other than the first group (122).

10. The method as claimed in one of claims 7 to 9, wherein the wind turbine (100) has the same standard controlling control variables as the further wind turbines (100) of the same group (122, 124) and different standard controlling control variables than the wind turbines (100) of other groups (122, 124).

11. A wind turbine which is configured to carry out the method as claimed in one of claims 7 to 10.

12. A wind park with a wind park controller (10, 21) as claimed in claim 6 and a plurality of wind turbines (100) as claimed in claim 11.

## Revendications

1. Procédé pour fournir des ensembles de données (28, 30) pour plusieurs éoliennes (100) d'un parc éolien (112), dans lequel le parc éolien (112) est divisé en au moins deux groupes (122, 124) et au moins un, plusieurs ou tous les groupes (122, 124) comprennent respectivement au moins deux éoliennes (100), comprenant les étapes de :
- production (50) d'un ensemble de données individuelles (28, 30) respectivement pour chacun des groupes, dans lequel l'ensemble de données individuelles (28, 30) présente une grandeur réglante de régulation de puissance active, qui est utilisée pour réguler l'éolienne (100),
**caractérisé par**
- la production (52) d'un paquet de données (34), qui comprend au moins les ensembles de données individuelles (28, 30) produits, et
- l'envoi (54) du paquet de données (34) à toutes les éoliennes du parc éolien,
dans lequel le paquet de données (34) comprend, en plus des ensembles de données individuelles respectivement pour chacun des groupes, également au moins un ensemble de données globales, qui est fourni pour plusieurs ou tous les groupes, dans lequel l'ensemble de données globales présente une grandeur réglante de régulation de puissance réactive, qui est utilisée pour réguler l'éolienne (100).

2. Procédé selon la revendication 1, dans lequel le procédé fournit les ensembles de données individuelles (28, 30) avec des signaux de commande ou une puissance mise en réserve.

3. Procédé selon l'une quelconque des revendications précédentes, dans lequel les grandeurs réglantes de régulation de puissance active sont produites en tant que données individuelles et les grandeurs réglantes de régulation de puissance réactive en tant que données globales.

4. Procédé selon l'une quelconque des revendications précédentes, dans lequel toutes les éoliennes (100) qui ont injecté de l'énergie pour la première fois dans un réseau (120) raccordé et/ou étaient raccordées au réseau (120) avant une date prédéfinie sont associées à un premier groupe (122, 124), et l'autre ou tous les autres groupes (122, 124) contiennent les éoliennes (100) restantes du parc éolien (112).

5. Procédé selon l'une quelconque des revendications précédentes, dans lequel des valeurs standard individuelles pour les éoliennes (100) sont fournies, qui présentent les mêmes valeurs pour les éoliennes (100) du même groupe (122, 124) et des valeurs différentes pour des groupes (122, 124) différents.

6. Régulateur de parc éolien, qui est conçu pour mettre en oeuvre le procédé selon l'une quelconque des revendications 1 à 5.

7. Procédé pour la réception d'ensembles de données (28, 30), qui sont fournis selon l'une quelconque des revendications 1 à 5, par une éolienne (100) d'un parc éolien (112), dans lequel l'éolienne (100) est associée à au moins l'un de deux groupes (122, 124) d'un parc éolien (112), dans lequel au moins un, plusieurs ou tous les groupes (122, 124) comprennent respectivement au moins deux éoliennes (100), comprenant les étapes de :
- réception (56) d'un paquet de données (34), qui comprend au moins des ensembles de données individuelles (28, 30) respectivement pour chacun des groupes (122, 124), dans lequel un ensemble de données individuelles (28, 30) présente une grandeur réglante de régulation de puissance active, qui est utilisée pour réguler l'éolienne (100), dans lequel le paquet de données (34) comprend, en plus des ensembles de données individuelles respectivement pour chacun des groupes, également au moins un ensemble de données globales, qui est fourni pour plusieurs ou tous les groupes, dans lequel l'ensemble de données globales présente une grandeur réglante de régulation de puissance réactive, qui est utilisée pour réguler l'éolienne (100),
- extraction (58) au moins de l'ensemble de données (28, 30) du paquet de données (34) pour le groupe (122, 124) auquel est associée l'éolienne (100), et
- utilisation (60) de l'ensemble de données (46) extrait dans l'éolienne (100).

8. Procédé selon la revendication 7, dans lequel l'ensemble de données (28, 30) contient des signaux de commande, qui sont utilisés dans l'éolienne (100) pour commander l'éolienne (100).

9. Procédé selon l'une quelconque des revendications 7 et 8, dans lequel l'éolienne (100) est associée à un premier groupe (122), lorsque l'éolienne (100) a injecté de l'énergie pour la première fois dans un réseau (120) raccordé et/ou était raccordée au réseau (120) avant une date prédéfinie, ou sinon est associée à un autre que le premier groupe (122).

10. Procédé selon l'une quelconque des revendications 7 à 9, dans lequel l'éolienne (100) présente les mêmes grandeurs réglantes de régulation standard que les autres éoliennes (100) du même groupe (122, 124) et des grandeurs réglantes de régulation standard différentes des éoliennes (100) d'autres groupes (122, 124).

11. Eolienne, qui est conçue pour mettre en oeuvre le procédé selon l'une quelconque des revendications 7 à 10.

12. Parc éolien avec un régulateur de parc éolien (10, 21) selon la revendication 6 et plusieurs éoliennes (100) selon la revendication 11.
